# EUROPÄISCHE PATENTSCHRIFT

(11) **EP 3 120 739 B1**
(45) Veröffentlichungstag und Bekanntmachung des Hinweises auf die Patenterteilung: **09.05.2018**
(21) Anmeldenummer: 16179454.0
(22) Anmeldetag: 14.07.2016
(51) Int. Cl.: A47J 31/36

(54) **BRÜHVORRICHTUNG UND HEISSGETRÄNKEZUBEREITUNGSVORRICHTUNG**
BREWING DEVICE AND HOT BEVERAGE PREPARATION DEVICE
DISPOSITIF D'EBOUILLANTAGE ET DISPOSITIF DE PRÉPARATION DE BOISSONS CHAUDES

(30) Priorität: 24.07.2015 DE 102015214100
(43) Veröffentlichungstag der Anmeldung: 25.01.2017
(73) Patentinhaber: BSH Hausgeräte GmbH, 81739 München (DE)
(72) Erfinder: Jan, Bostjan, 3320 Velenje (SI); Miklavzina, Marjan, 3325 Sostanj (SI); Studencnik, Simon, 2390 Ravne na Koroskem (SI)

(56) Entgegenhaltungen:
- EP-A1- 0 407 365
- WO-A1-01/74212
- WO-A1-2014/041478
- JP-A- 2003 010 050

## Beschreibung

Die Erfindung betrifft eine Brühvorrichtung für eine Heißgetränkezubereitungsvorrichtung insbesondere für Haushaltszwecke. Ferner betrifft die Erfindung eine entsprechende Heißgetränkezubereitungsvorrichtung, mit welcher insbesondere Heißgetränke oder heiße flüssige Lebensmittel, wie beispielsweise Kaffee, Tee, heiße Milch, Kakaogetränke oder auch Suppen zubereitet werden können. Nachfolgend werden die Begriffe "Heißgetränkezubereitungsvorrichtung", "Kaffeevollautomat" und "Zubereitungsvorrichtung" gleichbedeutend benutzt, so dass einer dieser Begriffe stets die anderen beinhaltet und sie daher gegeneinander austauschbar sind.

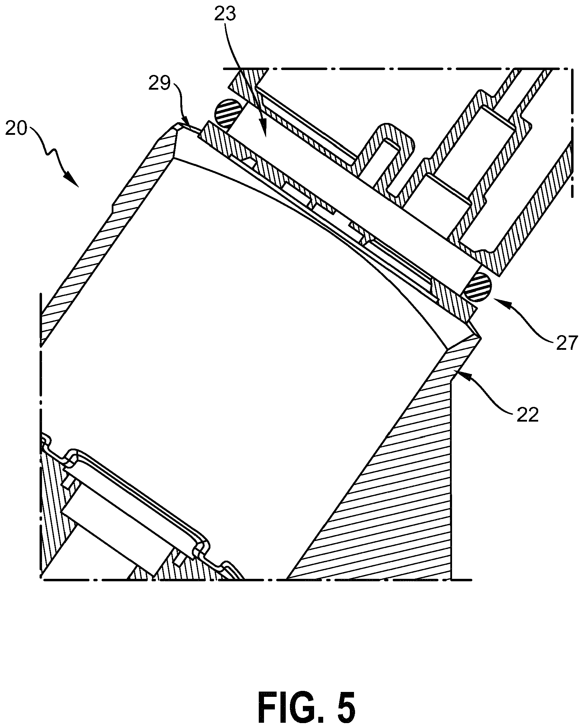

Aus der EP 2 025 267 B1 ist eine Brühkammer bekannt, bei welcher ein O-Ring einen Kolben gegen einen Brühzylinder abdichtet. Der O-Ring liegt in einer radialen Ebene, die sich senkrecht zu einer Rotationsachse des Brühzylinders erstreckt. Die obere Kante des Brühzylinders bzw. sein in einer achsparallelen Draufsicht kreisrunder Rand ist in einer Seitenansicht konvex gewölbt, weil der Brühzylinder zum Abstreifen eines Tresterkuchens und zum Neubefüllen mit Kaffeemehl aus einer zum Brühkopf koaxialen Brühposition um eine Schwenkachse in eine Mahlposition verschwenkt wird. Die Schwenkachse stellt zugleich die Wölbungsachse des Randes dar. Dies führt dazu, dass die Dichteinrichtung zuerst mit denjenigen Teilen des Brühzylinders in Kontakt kommt, welche dem Brühkopf am nächsten sind. Gleichzeitig bleiben aber Öffnungen zwischen der Dichteinrichtung und denjenigen Teilen des Brühzylinders offen, die weiter von dem Brühkopf entfernt sind. Dieser Zusammenhang wird in Figuren 5 und 6 verdeutlicht. Eine solche Situation kann zu verstärkter Verschmutzung der Heißgetränkezubereitungsvorrichtung durch austretende Rest-Flüssigkeiten vorangehender Brühvorgänge oder Kaffeepulver führen. Aus der WO 01/74212 A1 ist eine Brühvorrichtung nach dem Oberbegriff des Anspruchs 1 bekannt. Aufgabe der vorliegenden Erfindung ist es, eine Abdichtung einer Brühkammer für eine Heißgetränkezubereitungsvorrichtung bereitzustellen, die weniger zu Verschmutzungen neigt.

Diese Aufgabe wird erfindungsgemäß durch eine Brühvorrichtung mit den Merkmalen des unabhängigen Patentanspruchs 1 gelöst. Demgemäß weist eine Brühvorrichtung einen Brühzylinder auf, der als ein Hohlzylinder ausgebildet ist. Die Kontur eines offenen Endes des Hohlzylinders ist uneben. Der ringförmige Rand, welcher in einer achsparallelen Draufsicht das offene Ende des Hohlzylinders bildet, ist also in einer Seitenansicht nicht eben, sondern um die Schwenkachse des Brühzylinders konvex gewölbt. Die Brühvorrichtung weist ferner einen Brühkopf oder Brühkolben auf, der an dem offenen Ende in den Brühzylinder einführbar ist. Die Mantelfläche oder Hüllfläche des Brühkopfs weist eine Dichteinrichtung auf, die der unebenen Kontur des Brühzylinders folgt. Die Mantelfläche des Brühkopfs bezeichnet dabei dessen gewölbte äußere Fläche.

Der Brühkopf kann starr in der Brühvorrichtung bzw. einer Heißgetränkezubereitungsvorrichtung angeordnet sein. Bei einem Brühvorgang wird der z.B. mit Kaffeepulver befüllte Brühzylinder relativ zum Brühkopf und in seine Richtung bewegt. Durch die Bewegung wird das Kaffeepulver in der durch den Brühzylinder und den Brühkopf gebildeten Brühkammer verpresst. Zur Herstellung des Heißgetränks wird schließlich z.B. durch den Brühkopf heißes Wasser unter Druck in die Brühkammer eingeführt.

Die Dichteinrichtung dient dazu, einen ungewollten Druckabbau in der Brühkammer zu verhindern. Ist die Brühkammer geschlossen und sitzt der Brühkopf ausreichend tief in dem Brühzylinder, befindet sich die Dichteinrichtung zwischen der Mantelfläche des Brühkopfs und der Innenfläche des Brühzylinders bzw. der Zylinderwand. Der Brühzylinder und der Brühkopf sind in einer Aufsicht bzw. in einer Schnittansicht senkrecht zur Zylinderhochachse regelmäßig kreisförmig ausgebildet. Zwischen dem kleineren Außendurchmesser des Brühkopfs und dem größeren Innendurchmesser des Brühzylinders ist üblicherweise ein Spiel bzw. ein Zwischenraum vorhanden, den die Dichteinrichtung abdichtet. Die Dichteinrichtung ist dazu vorzugsweise aus einem elastischen, verformbaren Material gefertigt. Denn üblicherweise sind die Abmessungen der Dichteinrichtung größer als das Spiel bzw. der Zwischenraum zwischen der Mantelfläche des Brühkopfs und der Innenfläche des Brühzylinders. Befindet sich der Brühkopf in dem Brühzylinder, wird die Dichteinrichtung folglich zusammengepresst, um den Zwischenraum auch unter Druck in der Brühkammer zuverlässig abzudichten.

Die Heißgetränkezubereitungsvorrichtung mit einer erfindungsgemäßen Brüheinrichtung ist regelmäßig ein Kaffeevollautomat.

Erfindungsgemäß folgt die Dichteinrichtung der öffnungsseitigen Kontur des Brühzylinders. Ihr Verlauf ist daher in einer Seitenansicht parallel zur Wölbungsachse des ringförmigen Rands des Brühzylinders betrachtet ebenfalls gewölbt bzw. um die Schwenkachse gekrümmt. Anders als im Stand der Technik, wo der ebene O-Ring den oberseitig gewölbten Brühzylinder zuerst nur punktuell berührt, kommt die erfindungsgemäße Dichteinrichtung beim Einführen des Brühkolbens in den Brühzylinder folglich auf dem gesamten Umfang des Brühkolbens so gut wie gleichzeitig in Kontakt mit der ringförmigen Kante des offenen Endes des Brühzylinders. Der gesamte Zwischenraum zwischen dem Brühkolben und dem Brühzylinder wird folglich gleichzeitig abgeschlossen bzw. abgedichtet. Der Erfindung ist es also zu verdanken, erkannt zu haben, dass ein unerwünschtes Austreten von Rest-Flüssigkeiten vorangehender Brühvorgänge und von Getränkepulver dadurch effektiv zu verhindern ist, dass ein sukzessives Schließen der Brühkammer zugunsten eines sofortigen Verschließens vermieden wird. Unerwünschte Verschmutzungen und ein benutzerseitiger zusätzlicher Reinigungsaufwand lassen sich dadurch wirksam reduzieren.

Weitere, besonders vorteilhafte Ausgestaltungen und Weiterbildungen der Erfindung ergeben sich aus den abhängigen Ansprüchen sowie der nachfolgenden Beschreibung, wobei die Merkmale verschiedener Ausführungsbeispiele zu neuen Ausführungsbeispielen kombiniert werden können.

In einer vorteilhaften Ausführungsform kann der Brühkopf an seiner Mantelfläche eine Nut aufweisen, welche der unebenen Kontur folgt, also insbesondere einen um die Schwenkachse gekrümmten Verlauf aufweist, wobei die Dichteinrichtung in der Nut angeordnet ist. Die Form der Dichteinrichtung kann folglich durch die Nut vorgegeben werden, in welche die Dichteinrichtung eingesetzt werden kann. Es ist also kein aufwändiges Formen der Dichteinrichtung selbst oder deren entsprechende Anbringung auf der Mantelfläche des Brühkolbens notwendig. Die Nut braucht ferner nicht separat in dem Kolben hergestellt oder angebracht zu werden, sondern kann z.B. in einer Spritzgussform für den Brühkolben bei dessen Herstellung mit ausgebildet werden.

In die Nut kann jede geeignete Dichteinrichtung eingesetzt werden, welche für die Temperaturen und Druck geeignet ist, die in der Heißgetränkezubereitungsvorrichtung auftreten. Beispielsweise kann die Dichteinrichtung aus Gummi oder elastischem Kunststoff ausgebildet sein. Insbesondere kann die Dichteinrichtung z.B. ein O-Ring aus Gummi sein. Ein O-Ring stellt ein Standardbauteil dar, dessen Herstellung und Montage geläufig ist. Der Einsatz eines O-Rings in einer Nut ermöglicht einen sehr einfachen Austausch des O-Rings, falls dies z.B. bei einer Inspektion der Heißgetränkezubereitungsvorrichtung notwendig sein sollte.

In einer weiteren vorteilhaften Ausführungsform kann die Brühvorrichtung eine Fase an der inneren Kante der unebenen Kontur aufweisen. Die Fase kann dabei als abgeschrägte Fläche oder kreissegmentförmige Materialausnehmung an der inneren Kante der unebenen Kontur ausgeführt sein. Die Fase dient der Führung der Dichteinrichtung beim Eindringen des Brühkolbens in den Brühzylinder und ermöglicht ihr leichtes Einführen. Insbesondere verhindert die Fase ein Verkanten der Dichteinrichtung an der oberen Kante des Brühzylinders. Durch ein Verkanten könnte die Dichteinrichtung verschoben werden oder Material der Dichteinrichtung könnte abgeschoren werden, wodurch diese zerstört würde. Bei herkömmlichen Brüheinheiten ist daher die Größe der Fase üblicherweise an z.B. den Radius eines als Dichteinrichtung genutzten O-Rings angepasst. Die Fase ist also so groß, dass erst eine Kraft auf den O-Ring ausgeübt wird, wenn der gesamte äußere Umfang des O-Rings unterhalb der oberen Kante des Brühzylinders liegt. Der O-Ring hat also erst dann Kontakt zu der Innenfläche des Brühzylinders, wenn der gesamte äußere Umfang des O-Rings in dem Brühzylinder liegt. Bei einer solchen bekannten Ausführung muss die Fase entsprechend groß ausgeführt werden, wodurch größere Mengen an Rest-Flüssigkeiten vorangehender Brühvorgänge oder Getränkepulver austreten können. Durch die erfindungsgemäße Anpassung der Dichteinrichtung an die unebene Kontur des Brühzylinders dagegen kommt die Dichteinrichtung auf dem gesamten Umfang des Brühkolbens gleichzeitig in Kontakt mit dem Brühzylinder. Ein Abscheren der Dichteinrichtung wird dadurch verhindert. Folglich kann die Fase bei dem erfindungsgemäßen Brühzylinder deutlich kleiner ausgebildet werden. Dies führt dazu, dass nur geringe Mengen an Rest-Flüssigkeiten vorangehender Brühvorgänge oder Getränkepulver aus dem Brühzylinder austreten können. Das Innere der Heißgetränkezubereitungsvorrichtung verschmutzt folglich weniger und muss seltener gereinigt werden.

Die Erfindung wird im Folgenden unter Hinweis auf die beigefügten Figuren anhand von Ausführungsbeispielen noch näher erläutert. Dabei sind in den verschiedenen Figuren gleiche Komponenten mit identischen Bezugsziffern versehen. Es zeigen:
- Figur 1:: eine schematische Darstellung einer Ausführungsform der erfindungsgemäßen Brühvorrichtung,
- Figur 2:: eine Schnittansicht der schematischen Darstellung der Ausführungsform der erfindungsgemäßen Brühvorrichtung der Figur 1,
- Figur 3:: eine schematische Darstellung einer Ausführungsform der erfindungsgemäßen Brühvorrichtung bei einem Schließvorgang,
- Figur 4:: eine Darstellung einer herkömmlichen Brühvorrichtung, und
- Figur 5:: eine Schnittansicht der herkömmlichen Brühvorrichtung der Fig. 5.

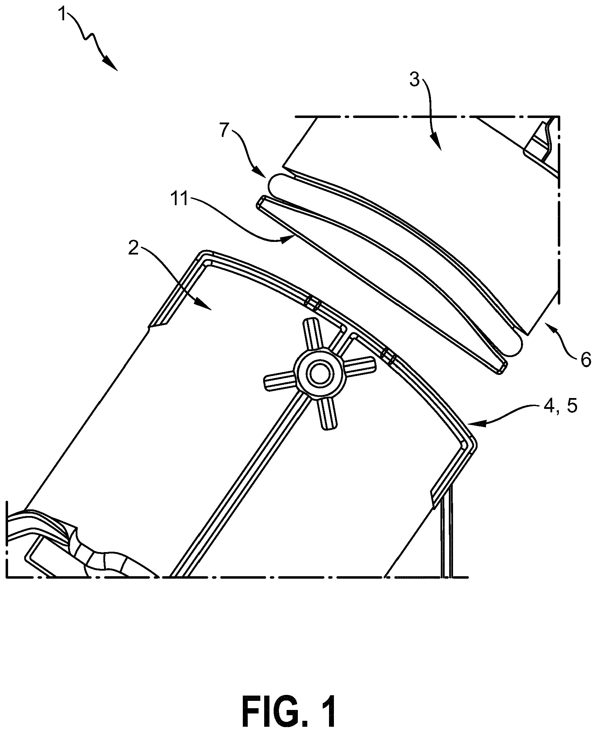

Die in einer Seitenansicht ausschnittsweise dargestellte Brühvorrichtung 1 der Figur 1 weist einen Brühzylinder 2 und einen Brühkopf 3 auf. Der Brühzylinder 2 ist als Hohlzylinder ausgebildet, dessen oberes offenes Ende einen ringförmigen Rand 4 aufweist. Eine Kontur 5 des Brühzylinders 2 an dem Rand 4 ist uneben, nämlich konvex gekrümmt. Die unebene Kontur 5 liegt also in einer gewölbten Fläche, welche um eine nicht dargestellte Schwenkachse des Brühzylinders 2 gewölbt ist, welche in Figur 1 senkrecht zur Bildebene und zugleich zur blattparallelen Rotationsachse des Brühzylinders 2 verläuft.

Der Brühkopf 3 der Brühvorrichtung 1 steht in Figur 1 über dem Rand 4 des Brühzylinders 2. Der Brühkopf 3 weist einen Außendurchmesser auf, der kleiner ist als der Innendurchmesser des Brühzylinders 2 und lässt sich relativ gegenüber dem Brühzylinder 2 koaxial verschieben. Eine untere scheibenförmige Stirnfläche 11 des Brühkopfs 3, die dem Rand 4 des Brühzylinders 2 zugewandt ist, ist flach bzw. eben ausgebildet. Schließlich ist in der Mantelfläche 6 des Brühkopfs 3 in der Nähe der Stirnfläche 11 eine auf ihr umfänglich umlaufende Nut 8 angebracht. Im Gegensatz zu der unteren Stirnfläche 11 des Brühkopfs 3 folgt die Nut 8 der unebenen Kontur 5 des Brühzylinders 2 insofern, als sie in der Seitenansicht der Figur 1 einen ebenfalls um die Schwenkachse gewölbten Verlauf nimmt. Die Nut 8 dient zur Befestigung eines O-Rings 7 als Dichteinrichtung an der Mantelfläche 6, indem er in die Nut 8 eingelegt ist. Die Nut 8 nimmt den O-Ring 7 fast vollständig auf. Er steht folglich über die Mantelfläche 6 nur geringfügig über. Weil er elastisch ist, übernimmt der montierte O-Ring 7 den gewölbten Verlauf der Nut 8.

Werden bei der Brühvorrichtung 1 der Brühzylinder 2 und der Brühkolben 3 koaxial aufeinander zubewegt, fährt der Brühkolben 3 in den Brühzylinder 2 ein. Zwischen der Mantelfläche 6 und der Innenwand des Brühzylinders 2 ist ein gewisses Spiel bzw. ein Zwischenraum vorhanden, durch welchen Flüssigkeiten oder Getränkepulver entweichen könnten. Diesen Zwischenraum dichtet der O-Ring 7 ab.

Durch die Formgebung für den O-Ring 7, welche der Form der unebene Kontur 5 des Brühzylinders 2 folgt, berührt der O-Ring 7 die unebene Kontur 5 über seinen gesamten Umfang im gleichen Moment, wenn der Brühkopf 3 und der Brühzylinder 2 zusammengefahren werden. Bei dieser Bewegung erfährt der O-Ring 7 über dessen gesamten Umfang eine gleichmäßige Belastung. Folglich wirken nur geringe Kräfte auf den O-Ring 7, die ihn daher nicht aus der Nut 8 herausdrücken. Durch das gleichzeitige Abschließen des gesamten Umfangs des Brühzylinders 2 können Rest-Flüssigkeiten oder Getränkepulver nur in sehr geringem Maß aus dem Brühzylinder 2 austreten und das Innere der Heißgetränkezubereitungsvorrichtung verschmutzen. Sie muss folglich seltener gereinigt werden, als herkömmliche Zubereitungsvorrichtungen.

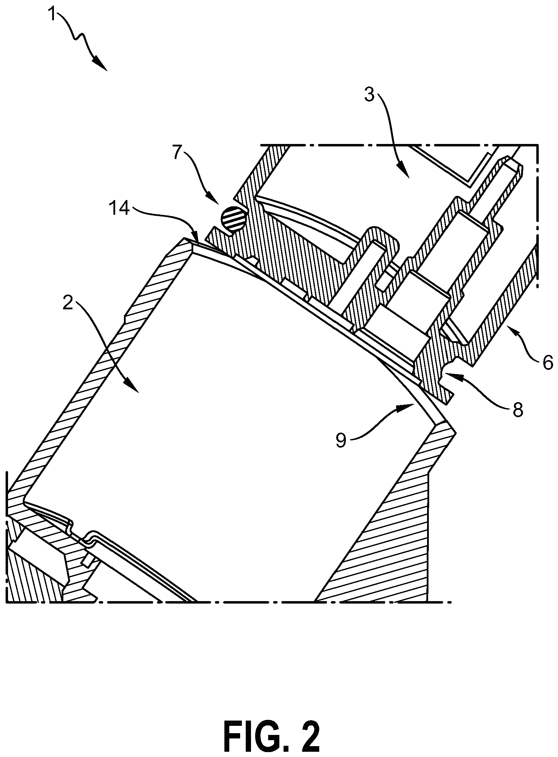

Figur 2 zeigt eine Schnittansicht der Brüheinrichtung 1 der Figur 1 durch die Mittelachse des Brühzylinders 2 und des Brühkopfs 3. Der O-Ring 7 ist lediglich auf der linken Seite des Brühkopfs 3 dargestellt. Auf der rechten Seite des Brühkopfs 3 wird der O-Ring 7 nicht dargestellt, um die Nut 8 deutlicher zu zeigen. Die achsparallele Höhe der Nut 8 entspricht dem Durchmesser des O-Rings 7. Die radiale Tiefe der Nut 8 ist so tief, dass ein Teil des O-Rings 7 aus der Nut 8 heraussteht, wenn dieser in die Nut 8 eingesetzt ist. Die Nut 8 ist insbesondere derart dimensioniert, dass ein so großer Teil des O-Rings 7 aus der Nut 8 heraussteht, dass dieser den Zwischenraum zwischen Brühzylinder 2 und Brühkopf 3 auch unter Druck abdichten kann. Dazu wird der O-Ring 7 komprimiert bzw. zusammengedrückt, wenn Brühzylinder 2 und Brühkopf 3 ineinander fahren. Der Grad der Kompression des O-Rings 7 wird bei der Entwicklung bzw. Konstruktion der Brühvorrichtung 1 vorgegebenen. Er ist u.a. abhängig von dem Druck, welcher bei einem Brühvorgang in der Brühvorrichtung 1 herrscht, also dem Betriebsdruck der Brühvorrichtung 1.

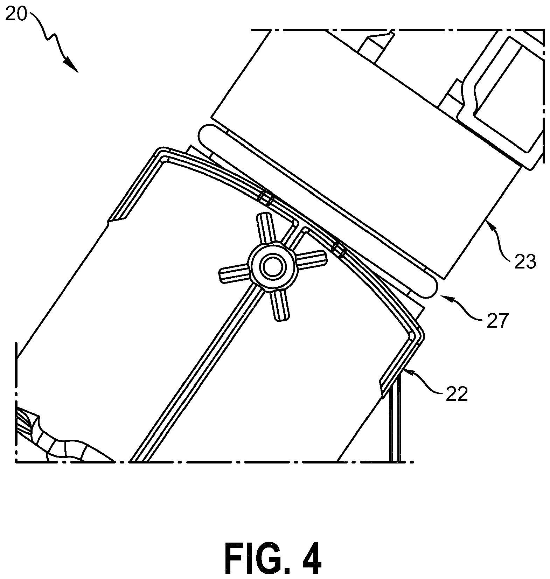

An einer inneren Kante 14 der unebenen Kontur 5 ist eine im Schnitt ebenflächige Fase 9 angebracht. Die Fase 9 wirkt wie ein Trichter, durch den der O-Ring 7 in den Brühzylinder 2 eingeführt wird. Sie verhindert, dass der O-Ring 7 aus der Nut 8 herausgedrückt oder durch eine anderenfalls scharfe Kante am Rand 4 abgeschoren wird, wenn der Brühkopf 3 und der Brühzylinder 2 zusammengefahren werden. Denn dabei kommt erfindungsgemäß der gesamte Umfang des O-Rings 7 gleichzeitig in Kontakt mit dem den Innenumfang des Brühzylinders 2 darstellenden Rand 4. Die Fase 9 kann daher sehr klein ausgeführt werden und der O-Ring 7 dennoch sicher in der Nut 8 gehalten werden. In der im Vergleich mit dem Stand der Technik (s. Figuren 4, 5) sehr kleinen Fase 9 kann sich nur wenig Getränkepulver bzw. Restflüssigkeit ablagern. Folglich wird das Austreten von Getränkepulver oder Rest-Flüssigkeiten beim Schließen der Brühvorrichtung 1 weiter reduziert.

Im Gegensatz dazu muss bei herkömmlichen Brühvorrichtungen 20 gemäß den Figuren 4 und 5 eine wesentlich größere Fase 29 vorgesehen sein, um den korrekten Sitz des O-Rings 27 sicherzustellen. Dies wird zur Verdeutlichung in Figuren 4 und 5 unten näher erläutert.

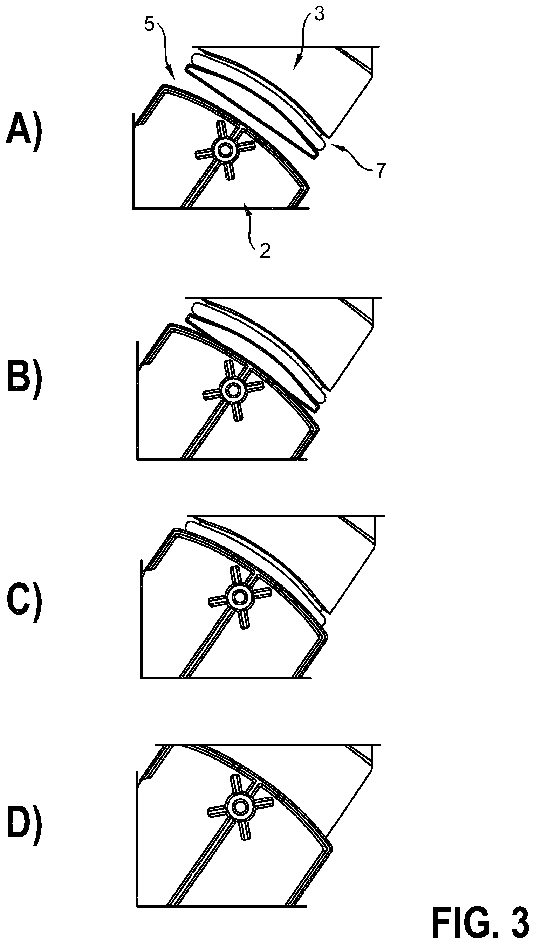

Figur 3 zeigt einen beispielhaften Bewegungsablauf eines Schließvorgangs der Brühvorrichtung 1. Die in Figur 3 dargestellte Sequenz weist vier Einzelschritte A- D auf. Der Übersichtlichkeit halber ist lediglich die Brühvorrichtung in dem ersten Schritt A mit Bezugszeichen versehen.

In dem Schritt A ist der Brühkopf 3 aus dem Brühzylinder 2 herausgefahren, und der Brühkopf 3 und der Brühzylinder 2 berühren sich nicht. In Schritt B ist der Brühzylinder 2 soweit an den Brühkolben 3 herangefahren, dass die untere Stirnfläche 11 des Brühkolbens 3 bereits teilweise in den Brühzylinder 2 eintaucht. Diejenigen Bereiche der unebenen Kontur 5, die am weitesten vom Brühzylinder 2 vorstehen, umschließen bereits die Stirnfläche 11 des Brühkolbens 3 . In Schritt C ist der Brühzylinder 2 bereits so weit über den Brühkolben 3 eingefahren, dass der O-Ring 7 über seinen gesamten Umfang und gleichzeitig die unebene Kante 5 bzw. die Fase 9 berührt. Der Brühzylinder 2 ist in diesem Schritt bereits abgedichtet. In Schritt D ist der Brühzylinder 2 in seine finale Position, also seine Betriebsposition, verfahren, in welcher eine Getränkezubereitung bzw. ein Brühvorgang durchgeführt werden kann. In dieser Position liegt der O-Ring komplett in dem Brühzylinder 2 und dichtet den Zwischenraum zwischen dem Brühzylinder 2 und dem Brühkopf 3 ab.

Figuren 4 und 5 zeigen eine herkömmliche Brühvorrichtung 20, bei welcher ein O-Ring 27 in einer ebenen Nut gelagert ist. Der O-Ring 27 liegt also in einer planen Ebene, welche senkrecht zur Mittelachse des Brühkolbens 23 liegt. In Figur 5 ist die Brühvorrichtung 20 teilweise geschlossen. Dies entspricht Schritt C der Figur 3. Lediglich ein Teil des O-Rings 27 ist in Kontakt mit dem Brühzylinder 22 bzw. dessen oberer Kante.

Um ein Abscheren bzw. ein Herausdrücken des O-Rings 27 aus seiner Halterung bzw. Nut zu verhindern, darf in diesem Moment lediglich eine sehr geringe Kraft auf den O-Ring ausgeübt werden. Um dies zu erreichen, muss die Fase 29 des Brühzylinders 22 deutlich größer ausgeführt werden, als bei der erfindungsgemäßen Brühvorrichtung 1. Dies ist in Figur 6 dargestellt, welche eine Schnittansicht der Brühvorrichtung 20 zeigt. Es ist zu erkennen, dass die Fase 29 deutlich größer ist, als die Fase 9 der Figur 2. Dies führt dazu, dass auf den O-Ring 27 erst dann eine Kraft ausgeübt wird, wenn der gesamte O-Ring 27 bereits in Kontakt mit dem Brühzylinder 22 ist. Durch die größere Fase 29 können sich allerdings größere Mengen an Getränkepulver und Rest-Flüssigkeiten zwischen dem Brühzylinder 22 und dem Brühkopf 23 sammeln, welche beim Schließen oder Öffnen der Brühvorrichtung 20 in das Innere der Zubereitungsvorrichtung gelangen können.

Da es sich bei der vorhergehend detailliert beschriebenen Brühvorrichtung um ein Ausführungsbeispiel handelt, kann sie in üblicher Weise vom Fachmann in einem weiten Umfang modifiziert werden, ohne den Bereich der Erfindung zu verlassen. Insbesondere können die Querschnitte des Brühzylinders und des Brühkolbens in anderer Form als in der hier beschriebenen erfolgen. Ebenso kann die Dichtungseinrichtung und insbesondere ihr Querschnitt in einer anderen Form ausgestaltet werden, wenn dies z.B. aus Platz- oder designerischen Gründen notwendig ist. Ist insbesondere der obere Rand des Brühzylinders auf Grund einer anderen Auswurf- oder Schwenkmechanik als der hier zugrunde gelegten z.B. konkav geformt, kann die Dichteinrichtung entsprechend der jeweiligen Form des oberen Rands des Brühzylinders beispielsweise entsprechend gekrümmt verlaufen. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1, 20: Brühvorrichtung
- 2, 22: Brühzylinder
- 3, 23: Brühkopf
- 4: Rand eines offenen Endes
- 5: unebene Kontur
- 6: Mantelfläche
- 7 27: Dichteinrichtung
- 8: Nut
- 9, 29: Fase
- 11: Stirnfläche
- 14: innere Kante
- A bis D: Bewegungsschritte

## Patentansprüche

1. Brühvorrichtung (1) für eine Heißgetränkezubereitungsvorrichtung,
- mit einem Brühzylinder (2), welcher als ein Hohlzylinder ausgebildet ist und an einem offenen Ende (4) eine unebene Kontur (5) aufweist, **dadurch gekennzeichnet, dass** die Brühvorrichtung (1) einen Brühkopf (3) umfasst, welcher in den Brühzylinder (2) an dem offenen Ende (4) einführbar ist und welcher an seiner Mantelfläche (6) eine Dichteinrichtung (7) aufweist, die der unebenen Kontur (5) folgt.

2. Brühvorrichtung (1) nach Anspruch 1, wobei der Brühkopf (3) an seiner Mantelfläche (6) eine Nut (8) aufweist, welche der unebenen Kontur (5) folgt, wobei die Dichteinrichtung (7) in der Nut (8) angeordnet ist.

3. Brühvorrichtung (1) nach Anspruch 2, mit einem O-Ring als Dichteinrichtung (7).

4. Brühvorrichtung (1) nach einem der Ansprüche 1 bis 3, mit einer Fase (9) an der inneren Kante der unebenen Kontur (5).

5. Heißgetränkezubereitungsvorrichtung mit einer Brühvorrichtung (1) nach einem der vorherigen Ansprüche 1 bis 4.

## Claims

1. Brewing device (1) for a hot beverage preparation device,
- with a brewing cylinder (2), which is embodied as a hollow cylinder and has an uneven contour (5) at one open end (4),
**characterised in that** the brewing device (1) comprises a brewing head (3), which can be inserted into the brewing cylinder (2) at the open end (4) and which has on its lateral surface (6) a sealing facility (7), which follows the uneven contour (5).

2. Brewing device (1) according to claim 1, wherein the brewing head (3) has on its lateral surface (6) a groove (8), which follows the uneven contour (5), wherein the sealing facility (7) is arranged in the groove (8).

3. Brewing device (1) according to claim 2, with an O-ring as sealing facility (7).

4. Brewing device (1) according to one of claims 1 to 3, with a chamfer (9) on the inner edge of the uneven contour (5).

5. Hot beverage preparation device with a brewing device (1) according to one of the preceding claims 1 to 4.

## Revendications

1. Dispositif d'ébouillantage (1) pour un dispositif de préparation de boissons chaudes,
- avec un cylindre d'ébouillantage (2), exécuté sous la forme d'un cylindre creux et présentant en une extrémité ouverte (4) un contour inégal (5), **caractérisé en ce que** le dispositif d'ébouillantage (1) comprend une tête d'ébouillantage (3) pouvant être introduite dans le cylindre d'ébouillantage (2) à l'extrémité ouverte (4) et qui présente sur sa surface d'enveloppe (6) un dispositif d'étanchéité (7) suivant le contour inégal (5).

2. Dispositif d'ébouillantage (1) selon la revendication 1, dans lequel la tête d'ébouillantage (3) présente, sur sa surface d'enveloppe (6), une rainure (8) suivant le contour inégal (5), le dispositif d'étanchéité (7) étant disposé dans la rainure (8).

3. Dispositif d'ébouillantage (1) selon la revendication 2, avec un joint torique comme dispositif d'étanchéité (7).

4. Dispositif d'ébouillantage (1) selon l'une des revendications 1 à 3, avec un chanfrein (9) sur le bord intérieur du contour inégal (5).

5. Dispositif de préparation de boissons chaudes avec un dispositif d'ébouillantage (1) selon l'une des revendications précédentes 1 à 4.
